(19) Europäisches Patentamt
European Patent Office
Office européen des brevets

(11) **EP 3 533 625 A1**

(12) **EUROPEAN PATENT APPLICATION**
published in accordance with Art. 153(4) EPC

(43) Date of publication:
**04.09.2019 Bulletin 2019/36**

(51) Int Cl.:
**B60C 11/16** (2006.01)

(21) Application number: **17863426.7**

(22) Date of filing: **08.06.2017**

(86) International application number:
**PCT/JP2017/021239**

(87) International publication number:
**WO 2018/078943 (03.05.2018 Gazette 2018/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.10.2016   JP 2016209213**

(71) Applicant: **TOYO TIRE CORPORATION**
**Itami-shi,**
**Hyogo 6640847 (JP)**

(72) Inventor: **SATOI, Aya**
**Hyogo 664-0847 (JP)**

(74) Representative: **Eisenführ Speiser**
**Patentanwälte Rechtsanwälte PartGmbB**
**Postfach 10 60 78**
**28060 Bremen (DE)**

(54) **STUD PIN AND PNEUMATIC TIRE PROVIDED WITH STUD PIN**

(57)    Provided is a stud pin 1 that includes a body 4 and a shaft 5 protruding from the body 4. The shaft 5 has a multi-stepped structure that contains plural steps including at least a first step 11 protruding from the body 4 and a second step 12 protruding from the first step 11. A hole 41 is arranged on an end surface 13a of a third step 13 that is the endmost step of the shaft 5.

FIG. 1

EP 3 533 625 A1

**Description**

TECHNICAL FIELD

The present invention relates to a stud pin, and a pneumatic tire comprising the stud pin.

BACKGROUND ART

Stud pins for pneumatic tires improve the driving performance (including the drive performance, the braking performance, and the turning performance) of a vehicle, on which pneumatic tires and the stud pins are mounted, on icy and snowy road surfaces by scratching and piercing the icy and snowy road surfaces.
The stud pin disclosed in Patent Literature 1 comprises a head or a body, and a pin or a shaft that protrudes from an end surface of the body. In a plan view, one side of the shaft has a discontinuous outline in which at least one tooth is defined.

CITATION LIST

PATENT LITERATURE

[Patent Literature 1] WO 2014/122570 A1

SUMMARY OF INVENTION

TECHNICAL PROBLEM

Conventional stud pins including the one disclosed in Patent Literature 1 still have room for improvement in terms of the driving performance on icy and snowy road surfaces.
An object of the present invention is to improve the driving performance exerted by a stud pin on icy and snowy road surfaces.

SOLUTION TO PROBLEM

One mode of the present invention provides a stud pin that comprises a body and a shaft protruding from the body, wherein the shaft has a multi-stepped structure that comprises plural steps including at least a first step protruding from the body and a second step protruding from the first step, and a hole is arranged on an end surface of an endmost step of the shaft.
The margin of the hole arranged on the end surface of the endmost step constitutes edge components. Accordingly, by arranging the hole, the total number of edge components and the total length of edge line segments (edge component total length) can be increased. Therefore, by arranging the hole, the edge components are allowed to function more effectively, whereby the driving performance on icy and snowy road surfaces can be improved.
An increase in the total number of the steps of the shaft leads to an increase in the total number of edge components and the edge component total length; however, the strength of the shaft (fracture resistance) is reduced. When the total number of edge components and the edge component total length are increased by arranging the hole, a reduction in the strength of the shaft is less likely to occur as compared to a case of increasing the total number of the steps of the shaft.
As described above, by arranging a hole on the end surface of the endmost step, the edge components of the shaft of the stud pin are allowed to function more effectively while securing the strength of the shaft, whereby the driving performance on icy and snowy road surfaces can be improved.
An area A1 bounded by the outline of the end surface of the endmost step in a plan view and an area A2 of the hole preferably satisfy the following.

$$0.1 \leq A2/A1 \leq 0.6$$

By setting the areas A1 and A2 in this range, an increase in the total number of edge components and the edge component total length, which is attributed to the arrangement of the hole, can be realized while suppressing a reduction in the strength of the shaft caused by the arrangement of the hole.

The depth of the hole is preferably not less than the protruding height of the endmost step.

This constitution allows the hole to remain even when abrasion of the shaft, specifically the endmost step, progresses. Therefore, even with the progress of abrasion, the advantage of an increase in the total number of edge components and the edge component total length, which is attained by arranging the hole, is maintained.

The outer shape of the first step in a plan view and that of the second step in a plan view are preferably different.

This constitution makes the directions of edge components of the first step different from the directions of edge components of the second step in a plan view. In other words, the shaft has edge components in multiple directions, and these edge components act in the multiple directions. As a result, the driving performance on icy and snowy road surfaces is further improved.

The number of the edge components of the second step is preferably less than the number of the edge components of the first step.

The larger the number of the edge components, the shorter is the length of each edge component. By setting the number of the edge components of the first step to be relatively large, the edge components can be ensured in multiple directions while securing the length of each edge component. Further, by setting the number of the edge components of the second step to be relatively small, the edge components can also be ensured in directions different from the directions of the edge components of the first step while securing the length of each edge component.

The number of edge components of the endmost step is preferably larger than the number of edge components of the second endmost step.

Generally speaking, the larger the number of the edge components of a step, the higher is the piercing effect of the step on icy and snowy road surfaces. Further, the endmost step has a higher piercing effect on icy and snowy road surfaces as compared to other steps. Therefore, by setting the number of the edge components of the endmost step to be relatively large, the piercing effect of the shaft on icy and snowy road surfaces can be effectively improved.

The number of the edge components constituted by the margin of the hole is preferably larger than the number of the edge components of the endmost step.

ADVANTAGEOUS EFFECTS OF INVENTION

According to the present invention, edge components of a shaft of a stud pin are allowed to function more effectively while securing the strength of the shaft, whereby the driving performance on icy and snowy road surfaces can be improved.

BRIEF DESCRIPTION OF DRAWINGS

FIG. 1 is a perspective view illustrating a stud pin according to a first embodiment of the present invention.
FIG. 2 is a plan view illustrating a shaft of the stud pin according to the first embodiment.
FIG. 3 is a cross-sectional view of FIG. 2 taken along a line III-III.
FIG. 4 is a developed view of a tread portion of a pneumatic tire on which the stud pin according to the first embodiment is mounted.
FIG. 5A is a plan view illustrating a shaft of a stud pin according to a second embodiment.
FIG. 5B is a cross-sectional view of FIG. 5A taken along a line V-V.
FIG. 6A is a plan view illustrating a shaft of a stud pin according to a third embodiment.
FIG. 6B is a cross-sectional view of FIG. 6A taken along a line VI-VI.
FIG. 7A is a plan view illustrating a shaft of a stud pin according to a fourth embodiment.
FIG. 7B is a cross-sectional view of FIG. 7A taken along a line VII-VII.
FIG. 8A is a plan view illustrating a shaft of a stud pin according to a fifth embodiment.
FIG. 8B is a cross-sectional view of FIG. 8A taken along a line VIII-VII.
FIG. 9A is a plan view illustrating a shaft of a stud pin according to a sixth embodiment.
FIG. 9B is a cross-sectional view of FIG. 9A taken along a line IX-IX.
FIG. 10A is a plan view illustrating a shaft of a stud pin according to a seventh embodiment.
FIG. 10B is a cross-sectional view of FIG. 10A taken along a line X-X.
FIG. 11 is a partial perspective view of a stud pin according to Comparative Example 1.
FIG. 12 is a partial perspective view of a stud pin according to Comparative Example 2.

DESCRIPTION OF EMBODIMENTS

Embodiments of the present invention will now be described referring to the attached drawings.

(First Embodiment)

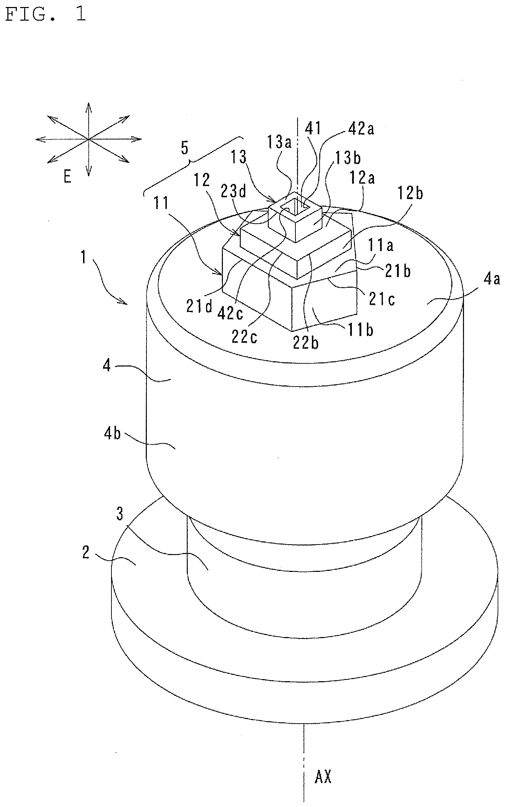

Referring to FIGs. 1 to 3, a stud pin 1 of this embodiment as a whole has a shape that extends along its axis AX. In the following descriptions, the term "plan view" may be hereinafter used for the shape of the stud pin 1 viewed from its tip side along the axis AX.

The stud pin 1 comprises: a base 2 on the bottom-most side; a shank 3 protruding from the base 2; and a body 4 arranged on the tip of the shank 3. The stud pin 1 further comprises a shaft 5 protruding from the body 4.

In this embodiment, the base 2 is substantially disk-shaped, and the body 4 is substantially cylindrical. The shank 3 has a substantially short cylindrical shape having a smaller diameter than the base 2 and the body 4. Further, the base 2, the shank 3 and the body 4 constitute an integrated structure and are made of aluminum or an aluminum alloy. Other structures and other materials can be employed for all of the base 2, the shank 3 and the body 4.

The body 4 comprises an end surface 4a and a side surface 4b. In this embodiment, the end surface 4a is substantially a flat surface that extends perpendicular to the axis AX. The end surface 4a may be inclined with respect to the axis AX and may be a non-flat surface. The shaft 5 protrudes from the end surface 4a of the body 4 in the direction along the axis AX. The outline or outer shape of the shaft 5 in a plan view fits inside a region bounded by the outer shape of the end surface 4a of the body 4 in the plan view. In other words, the area of the outer shape of the shaft 5 in a plan view is smaller than the area of the outer shape of the end surface 4a of the body 4 in the plan view. For example, the area of the former can be set at 10 to 45% of the area of the latter.

In this embodiment, the material of the shaft 5 is tungsten. The shaft 5 is a separate component from the base 2, the shank 3 and the body 4, and is engaged and thereby fixed with the body 4. As for the shaft 5, other material can be employed. The shaft 5 and the body 4 may have an integrated structure as well.

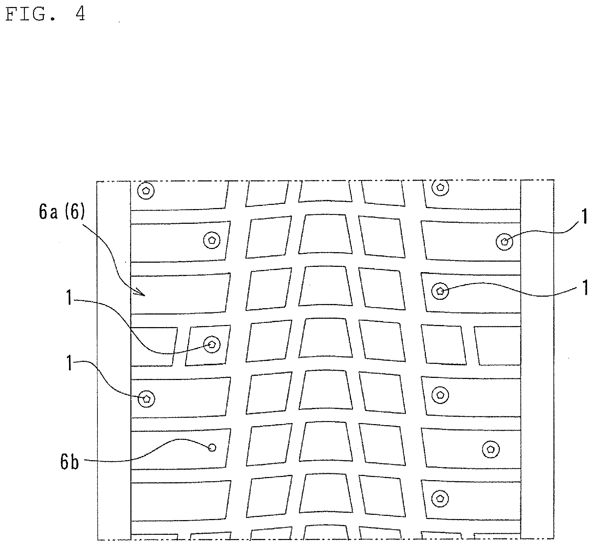

Referring to FIG. 4 in combination, the stud pin 1 is used by being mounted into pin holes 6b that are formed on a tread portion 6a of a pneumatic tire 6. The base 2 and the shank 3 are entirely housed in each pin hole 6b. The body 4 is housed in each pin hole 6b with its end surface 4a and the shaft 5 being exposed on the tread portion 6.

The shaft 5 has a multi-stepped structure comprising plural steps. In this embodiment, the shaft 5 comprises three steps, namely a first step 11, a second step 12 and a third step 13. The first to the third steps 11, 12 and 13 of the shaft 5 comprise end surfaces 11a, 12a and 13a, and side surfaces 11b, 12b and 13b, respectively. The step on the bottom-most side, namely the first step 11, protrudes from the end surface 4a of the body 4. Further, the intermediate step, namely the second step 12, protrudes from the end surface 11a of the first step 11. Still further, the endmost step, namely the third step 13, protrudes from the end surface 12a of the second step 12. The shaft 5 may have four or more steps. Alternatively, the shaft 5 may be constituted by two steps.

The total height of the shaft 5 (in this embodiment, the height from the end surface 4a of the body 4 to the end surface 13a of the third step 13) can be set at, for example, 0.5 mm to 3 mm. In addition, the ratio of a sum of the heights of the steps other than the first step 11 (in this embodiment, a sum of the heights of the second and the third steps 12 and 13) with respect to the total height of the shaft can be set at, for example, 10% to 90%.

In the first to the third steps 11, 12 and 13 of the shaft 5, the end surfaces 11a, 12a and 13a in a plan view have larger outer shapes toward the side of the body 4, namely the base-end side. Conversely, in the first to the third steps 11, 12 and 13 of the shaft 5, the end surfaces 11a, 12a and 13a in a plan view have smaller outer shapes toward the tip side. Accordingly, the shaft 5 as a whole constitutes a pointed protrusion that protrudes in a stepped manner from the end surface 4a of the body 4.

In this embodiment, the end surfaces 11a, 11b and 11c of the first to the third steps 11, 12 and 13 are substantially flat surfaces that extend perpendicular to the axis AX. The end surfaces 11a, 11b and 11c may be inclined with respect to the axis AX and may be non-flat surfaces.

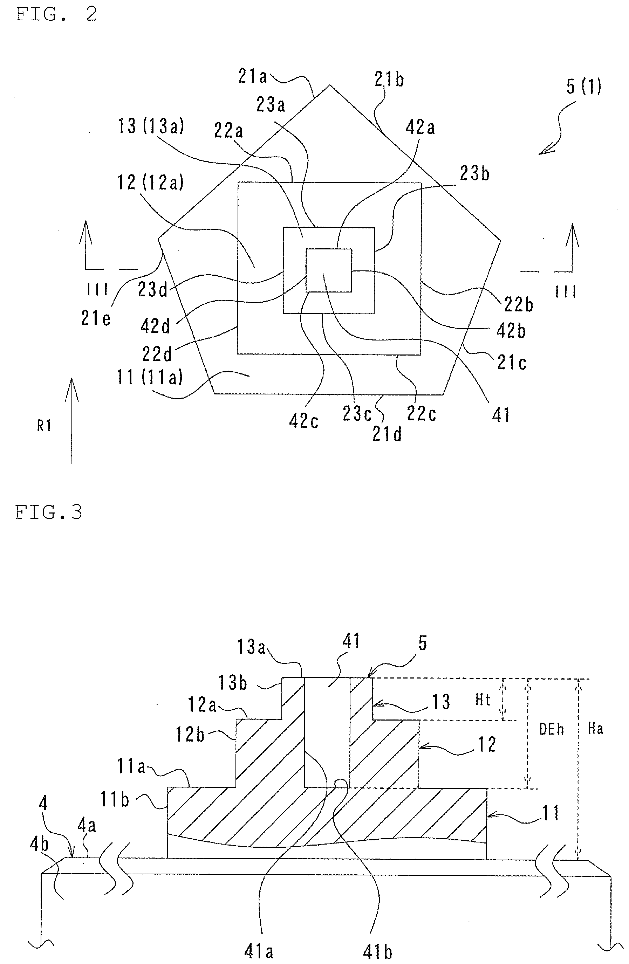

As most clearly illustrated in FIG. 2, the outer shapes of the end surfaces 11a, 12a and 13a of the first to the third steps 11, 12 and 13 in a plan view are pentagonal, quadrangular and quadrangular, respectively. In the first step 11 whose end surface 11a is pentagonal, five sides and edge components 21a, 21b, 21c, 21d and 21e are formed by the end surface 11a and the side surface 11b. Further, in the second step 12 whose end surface 12a is quadrangular, four sides and edge components 22a, 22b, 22c and 22d are formed by the end surface 12a and the side surface 12b. Moreover, in the third step 13 whose end surface 13a is quadrangular, four sides and edge components 23a, 23b, 23c and 23d are formed by the end surface 13a and the side surface 13b. In this embodiment, the edge components 21a to 21e, 22a to 22d and 23a to 23d are linear. However, these edge components 21a to 21e, 22a to 22d and 23a to 23d are not required to be linear in a geometrically strict sense and may be curved or tortuous to a certain extent as long as a scratching effect on icy and snowy road surfaces is attained. In addition, these edge components 21a to 21e, 22a to 22d and 23a to 23d may be chamfered as long as a scratching effect on icy and snowy road surfaces is attained.

A hole 41 having a closed bottom is arranged on the end surface 13a of the third step 13, which is the endmost step of the shaft 5. In this embodiment, the shape of the hole 41 in a plan view is quadrangular similar to the end surface 13a. The hole 41 is arranged such that, in a plan view, the position of its centroid is substantially aligned with that of the end surface 13a. In this embodiment, the hole 41 has a uniform cross-sectional shape along the entirety of the depth direction. However, the cross-sectional shape of the hole 41 may vary in the depth direction.

In this embodiment, since the outer shape of the hole 41 in a plan view is quadrangular, the margin of the hole 41 that is formed by a side wall 41a of the hole 41 and the end surface 13a of the third step 13 constitutes four sides and edge component 42a, 42b, 42c and 42d. In this embodiment, the edge components 42a to 42d of the hole 41 are linear. However, these edge components 42a to 42d are not required to be linear in a geometrically strict sense and may be curved or tortuous to a certain extent as long as a scratching effect on icy and snowy road surfaces is attained. In addition, these edge components 42a to 42d may be chamfered as long as a scratching effect on icy and snowy road surfaces is attained.

Accordingly, by arranging the hole 41, the shaft 5 is provided with the edge components 42a to 42d of the hole 41 in addition to the edge components 21a to 21e, 22a to 22d and 23a to 23d of the first to the third steps 11 to 13. In other words, by arranging the hole 41, the total number of the edge components of the shaft 5 and the total length of the edge line segments of the shaft 5 (edge component total length) can be increased. Therefore, by arranging the hole 41, the edge components of the shaft 5 are allowed to function more effectively, whereby the driving performance on icy and snowy road surfaces can be improved.

The total number of the edge components and the edge component total length can also be increased by increasing the total number of the steps of the shaft 5, instead of arranging the hole. However, in this case, the strength (fracture resistance) of the shaft 5 is reduced due to an increase in total height Ha of the shaft 5. When the total number of the edge components and the edge component total length are increased by arranging the hole 41, a reduction in the strength of the shaft is less likely to occur as compared to a case of increasing the total number of the steps of the shaft 5.

By arranging the hole 41, the third step 13, which is the endmost step, is made more likely to pierce icy and snowy road surfaces as compared to a case where the hole 41 is not arranged. In this respect as well, by arranging the hole 41, the driving performance on icy and snowy road surfaces can be improved.

As described above, by arranging the hole 41 on the end surface 13a of the third step 13 which is the endmost step, the edge components of the shaft 5 are allowed to function more effectively while securing the strength of the shaft 5, whereby the driving performance on icy and snowy road surfaces can be improved.

The area A1 of a region bounded by the outline of the end surface 13a of the endmost third step 13 in a plan view and the area A2 of a region bounded by the margin of the hole 41 in a plan view, namely the edge components 42a to 42d, can be set to be in a range defined by the following inequality.

$$0.1 \leq A2/A1 \leq 0.6$$

By setting the areas A1 and A2 in this range, an increase in the total number of the edge components and the edge component total length, which is attributed to the arrangement of the hole 42, can be realized while suppressing a reduction in the strength of the shaft 5 caused by the arrangement of the hole 42.

Referring to FIG. 3, the depth DEth of the hole 41 is not less than the protruding height Ht of the third step 13 which is the endmost step (the height from the end surface 12a of the second step 12 to the end surface 13a of the third step 13). Specifically, the depth DEth of the hole 41 is set such that a bottom wall 41b of the hole 41 is positioned in the vicinity of the end surface 11a of the first step 11 which is the bottom-most step. By setting the depth DEth of the hole 41 to be large, the hole 41 remains even when abrasion of the shaft 5, specifically the third step 13 which is the endmost step, progresses. Moreover, the hole 41 also remains even when abrasion of the second step 12 progresses. In other words, even with the progress of abrasion, the advantage of an increase in the total number of the edge components and the edge component total length, which is attained by arranging the hole, is maintained.

As described above, the end surface 11a of the first step 11 has a pentagonal planar shape, and the end surface 12a of the second step 12 has a quadrangular planar shape. In other words, the first step 11 and the second step 12 of the shaft 5 are different in terms of the outer shapes of their end surfaces 11a and 12a in a plan view. Accordingly, the edge components 21a to 21e of the first step 11 and the edge components 22a to 22d of the second step 12 have different orientations in a plan view. More specifically, in a plan view, none of the edge components 22a to 22d of the second step 12 is parallel to any of the edge components 21a to 21e of the first step 11. In other words, as conceptually illustrated with a symbol E in FIG. 1, the shaft 5 has edge components oriented in multiple directions, and these edge components act in the multiple directions. As a result, the driving performance on icy and snowy road surfaces is improved.

The first step 11 has five edge components 21a to 21e, and the second step 12 has four edge components 22a to 22d. In addition, the end surface 12a of the second step 12 is smaller than the end surface 11a of the first step 11. Generally speaking, when the end surfaces of steps have the same size, the larger the number of edge components, the shorter is the length of each edge component. Accordingly, by setting the number of the edge components of the first step 11 having the relatively large end surface 11a to be relatively large, the edge components 21a to 21e can be ensured in multiple directions while securing the lengths of the individual edge components 21a to 21e. Moreover, by setting the number of the edge components of the second step 12 having the relatively small end surface 12a to be relatively small, the edge components 22a to 22d can be ensured in directions different from the directions of the edge components 21a to 21e of the first step 11 while securing the lengths of the individual edge components 22a to 22d. As a result, the driving performance on icy and snowy road surfaces is further improved as compared to a case where the outer shape of the end surface 11a of the first step 11 and that of the end surface 12a of the second step 12 are simply different.

Other embodiments of the present invention will now be described. With regard to these embodiments, structures and functions that are not particularly mentioned are the same as in the first embodiment. Further, in the drawings relating to these embodiments, the same symbols are assigned to those elements that are identical or similar to the corresponding elements of the first embodiment.

(Second Embodiment)

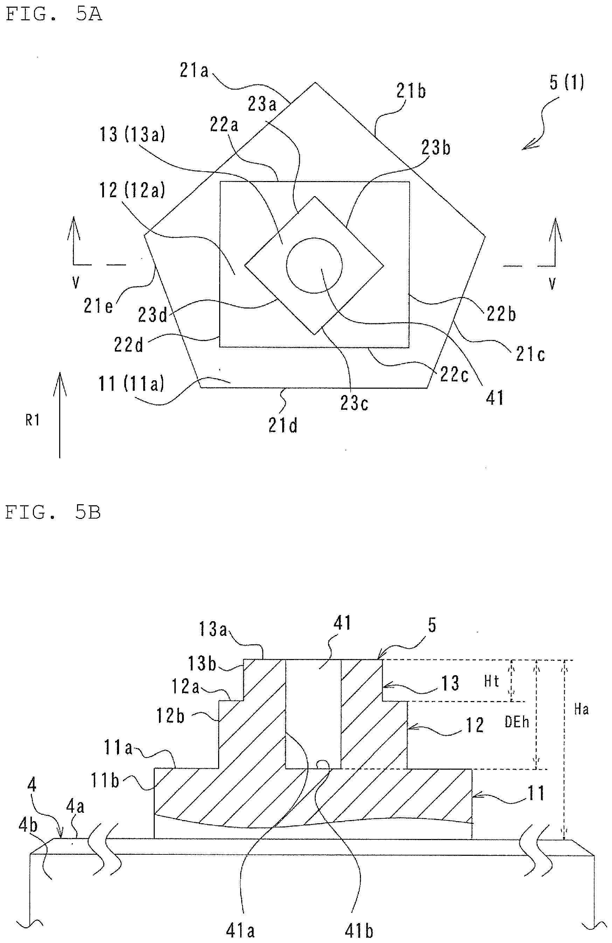

In the stud pin 1 according to the second embodiment that is illustrated in FIGs. 5A and 5B, the outer shapes of the end surfaces 11a to 13a of the first to the third steps 11 to 13 in a plan view are pentagonal, quadrangular and quadrangular, respectively. The outer shape of the hole 41 in a plan view is circular. The first step 11 comprises five edge components 21a to 21e, and the second step 12 comprises four edge components 22a to 22d. Further, the third step 13 comprises four edge components 23a to 23d. Moreover, the number of the edge components of the hole 41 that is circular can be regarded as infinity.

The first step 11 and the second step 12 have different outer shapes in a plan view, and the number of the edge components of the second step 12 is four, which is less than the number of the edge components of the first step 11 that is five.

The number of the edge components constituted by the margin of the hole 41 that is circular in a plan view can be regarded as infinity, and this is larger than the number of the edge components 23a to 23d of the third step 13 that is quadrangular in a plan view, i.e., four. In this manner, by setting the number of the edge components of the hole 41 to be larger than the number of the edge components of the third step 13 that is the endmost step, the above-described piercing effect of the third step 13 on icy and snowy road surfaces, which is attained by arranging the hole 41, is further improved.

(Third Embodiment)

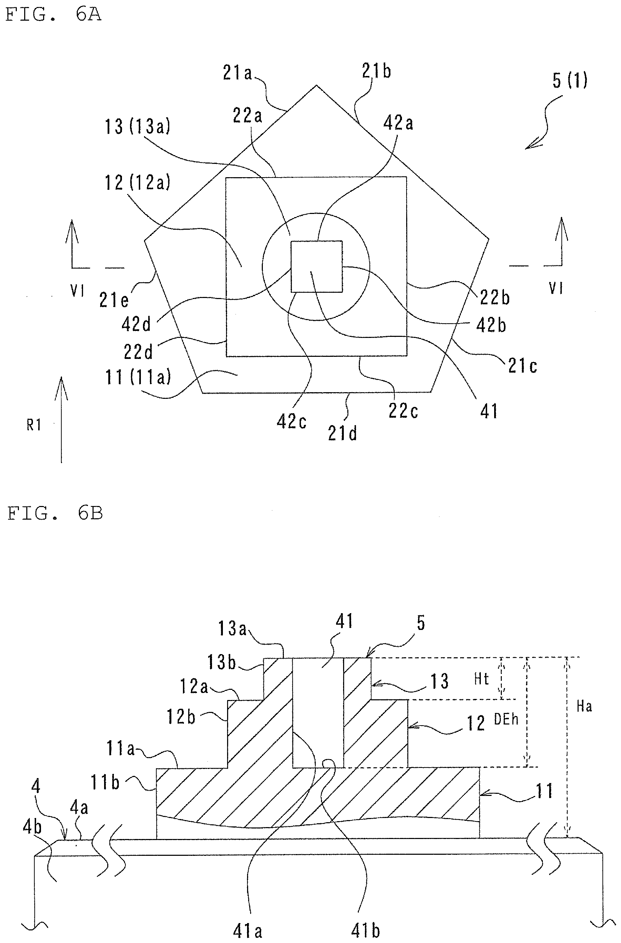

In the stud pin 1 according to the third embodiment that is illustrated in FIGs. 6A and 6B, the outer shapes of the end surfaces 11a to 13a of the first to the third steps 11 to 13 in a plan view are pentagonal, quadrangular and circular, respectively. The outer shape of the hole 41 in a plan view is quadrangular. The first step 11 comprises five edge components 21a to 21e, and the second step 12 comprises four edge components 22a to 22d. Further, the number of the edge components of the third step 13 that is circular can be regarded as infinity. Moreover, the hole 41 comprises four edge components 42a to 42d.

The first step 11 and the second step 12 have different outer shapes in a plan view, and the number of the edge components of the second step 12 is four, which is less than the number of the edge components of the first step 11 that is five.

As described above, the end surface 13a of the third step 13 which is the endmost step is circular, and the number of its edge components can be regarded as infinity. Further, the end surface 12a of the second step 12, which is the second endmost step, is quadrangular and has four edge components 22a to 22d. In other words, the number of the edge components of the third step 13, which is the endmost step, is larger than the number of the edge components of the second step 12, which is the second endmost step.

With regard to the first to the third steps 11 to 13, each step exerts a higher piercing effect on icy and snowy road surfaces as the number of the edge components increases. Moreover, the third step 13, which is the endmost step, exerts a higher piercing effect on icy and snowy road surfaces as compared to the first and the second steps 11 and 12. Therefore, by setting the number of the edge components of the third step 13, which is the endmost step, to be larger than the number of the edge components of the second step 12, the piercing effect of the shaft 5 on icy and snowy road surfaces can be effectively improved, and the driving performance on icy and snowy road surfaces can thereby be improved.

(Fourth Embodiment)

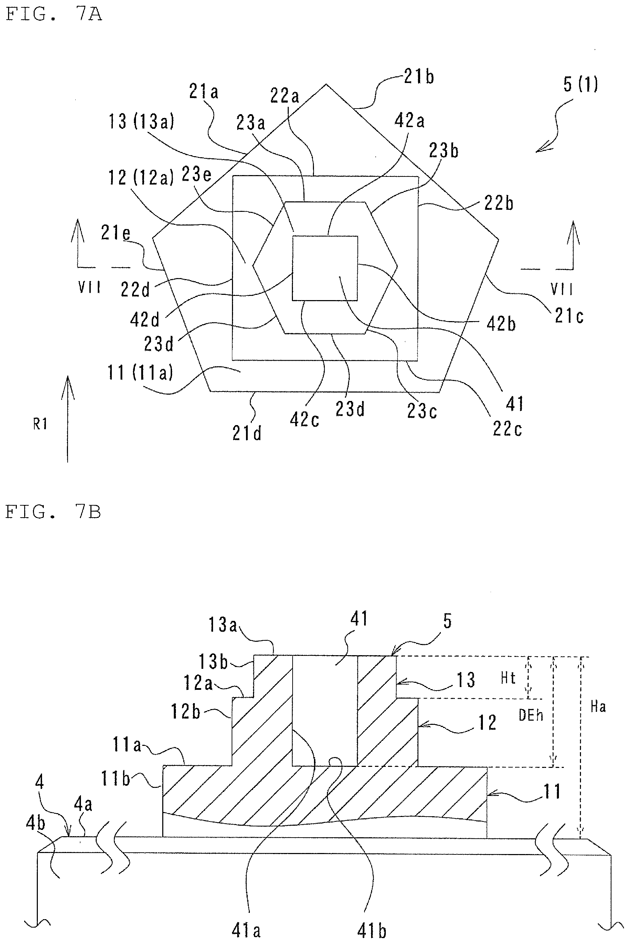

In the stud pin 1 according to the fourth embodiment that is illustrated in FIGs. 7A and 7B, the outer shapes of the end surfaces 11a to 13a of the first to the third steps 11 to 13 in a plan view are pentagonal, quadrangular and hexagonal, respectively. The outer shape of the hole 41 in a plan view is quadrangular. The first step 11 comprises five edge components 21a to 21e, and the second step 12 comprises four edge components 22a to 22d. Further, the third step 13 comprises six edge components 13a to 13f. Moreover, the hole 41 comprises four edge components 42a to 42d.

The first step 11 and the second step 12 have different outer shapes in a plan view, and the number of the edge components of the second step 12 is four, which is less than the number of the edge components of the first step 11 that is five. In addition, the number of the edge components of the third step 13, which is the endmost step, is six and thus larger than the number of the edge components of the second step 12, which is the second endmost step, of four.

(Fifth Embodiment)

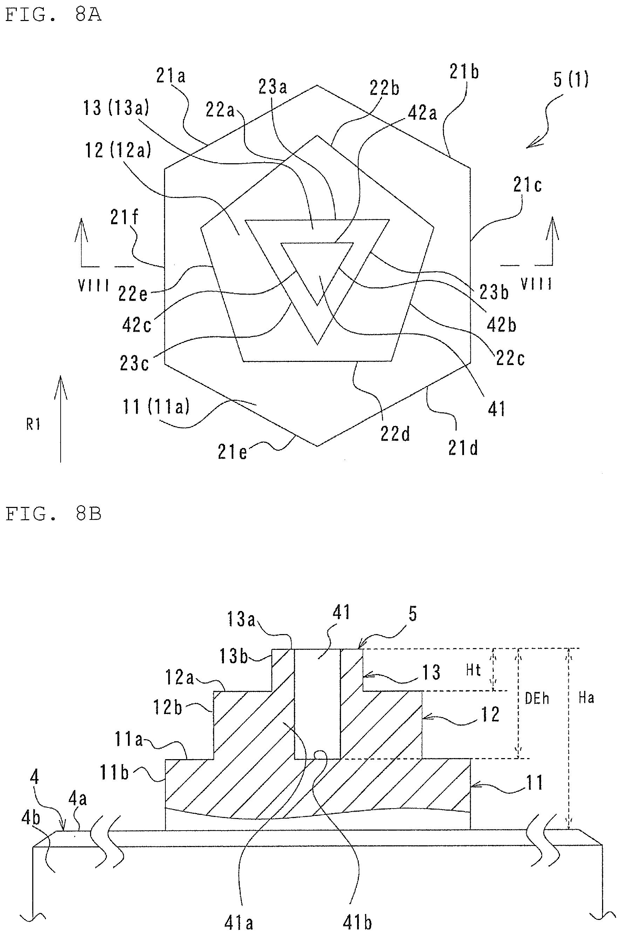

In the stud pin 1 according to the fifth embodiment that is illustrated in FIGs. 8A and 8B, the outer shapes of the end surfaces 11a to 13a of the first to the third steps 11 to 13 in a plan view are hexagonal, pentagonal and triangular, respectively. The outer shape of the hole 41 in a plan view is triangular. The first step 11 comprises six edge components 21a to 21f, and the second step 12 comprises five edge components 22a to 22e. Further, the third step 13 comprises three edge components 13a to 13c. Moreover, the hole 41 comprises three edge components 42a to 42c.

The first step 11 and the second step 12 have different outer shapes in a plan view, and the number of the edge components of the second step 12 is five, which is less than the number of the edge components of the first step 11 that is six.

(Sixth Embodiment)

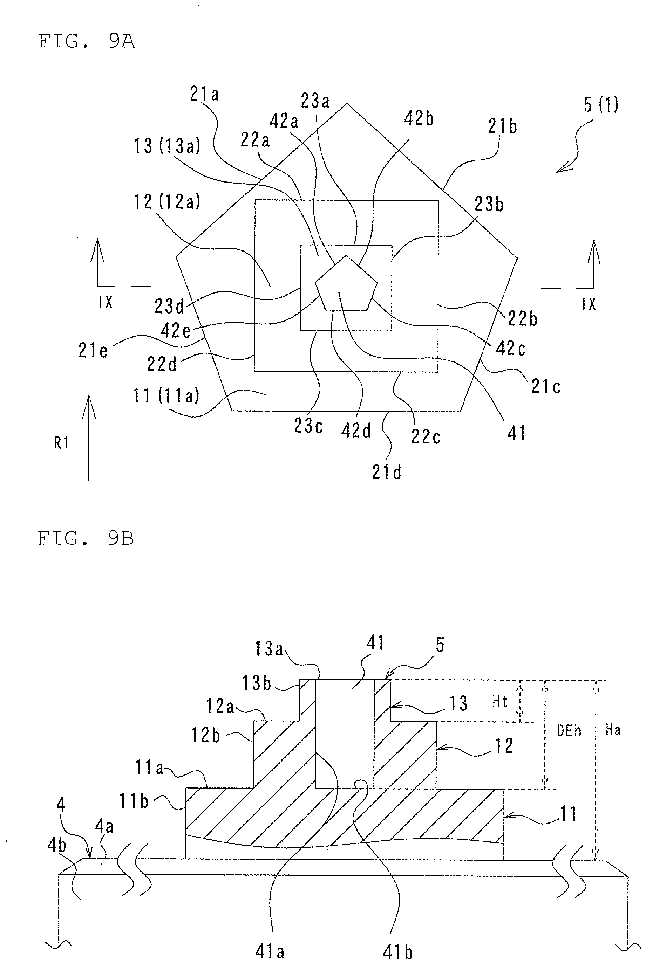

In the stud pin 1 according to the sixth embodiment that is illustrated in FIGs. 9A and 9B, the outer shapes of the end surfaces 11a to 13a of the first to the third steps 11 to 13 in a plan view are pentagonal, quadrangular and quadrangular, respectively. The outer shape of the hole 41 in a plan view is pentagonal. The first step 11 comprises five edge components 21a to 21e, and the second step 12 comprises four edge components 22a to 22d. Further, the third step 13 comprises four edge components 13a to 13d. Moreover, the hole 41 comprises five edge components 42a to 42e.

The first step 11 and the second step 12 have different outer shapes in a plan view, and the number of the edge components of the second step 12 is four, which is less than the number of the edge components of the first step 11 that is five. In addition, the number of the edge components of the hole 41 is six and thus larger than the number of the edge components of the third step 13, which is the endmost step, of four.

(Seventh Embodiment)

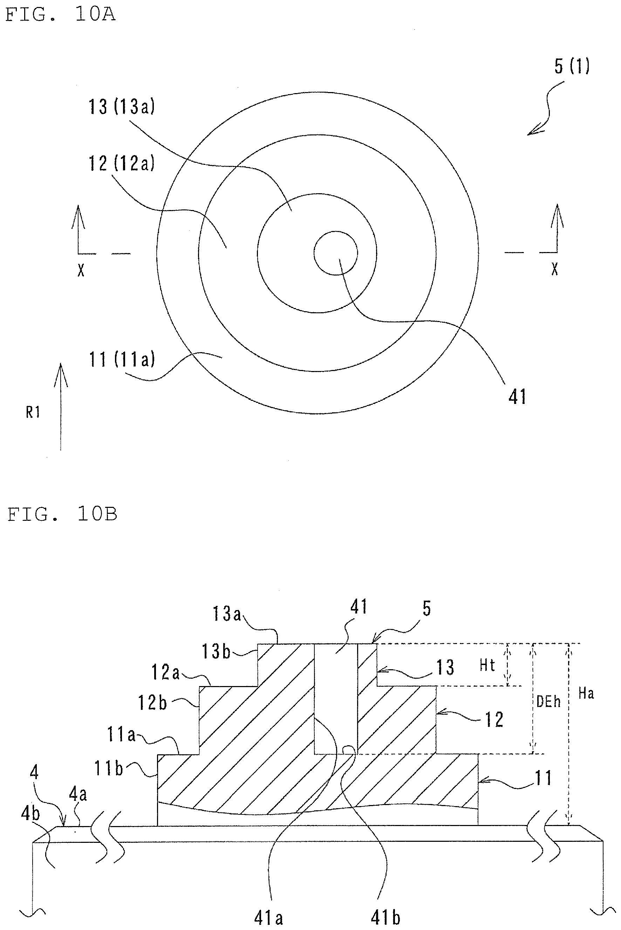

In the stud pin 1 according to the seventh embodiment that is illustrated in FIGs. 10A and 10B, the outer shapes of the end surfaces 11a to 13a of the first to the third steps 11 to 13 in a plan view are all circular. Further, the outer shape of the hole 41 in a plan view is also circular.

The hole 41 is arranged such that the position of its center of gravity in a plan view is different from the position of the center of gravity of the end surface 13a of the third step 13 in a plan view. For the first to the third embodiments as well, the position of the center of gravity of the hole 41 may be different from the position of the center of gravity of the end surface 13a of the third step 13.

In all of the first to the seventh embodiments, a single hole 41 is arranged on the shaft 5. Two or more holes having the same or different shapes in a plan view may be arranged as long as the strength of the shaft 5 can be secured.

(Evaluation Test)

As shown in Table 1 below, the stud pins of Comparative Examples 1 and 2 and the first to the fourth embodiments (which were all brand new) were tested to evaluate the drive performance, the braking performance and the turning performance.

As test tires, tires having a size of 195/65R15 and an air pressure Fr/Re of 220/220 (kPa) were used. In this evaluation test, the test tires were mounted on a test vehicle (1,500 cc, 4WD mid-size sedan), and this test vehicle was driven on an icy road surface. For the evaluation of the edge performance, Comparative Example 2 and the first to the fifth embodiments were each evaluated as an index, taking the edge performance of Comparative Example 1 as 100. The drive performance was evaluated in terms of the time required for the test vehicle to reach 30 m after starting from a stopped state on the icy road surface. The braking performance was evaluated in terms of the braking distance when a braking force was applied by ABS (Antilock Brake System) at a speed of 40 km/h. The turning performance was evaluated in terms of the turning radius when a turn was made at the same speed of 40 km/h.

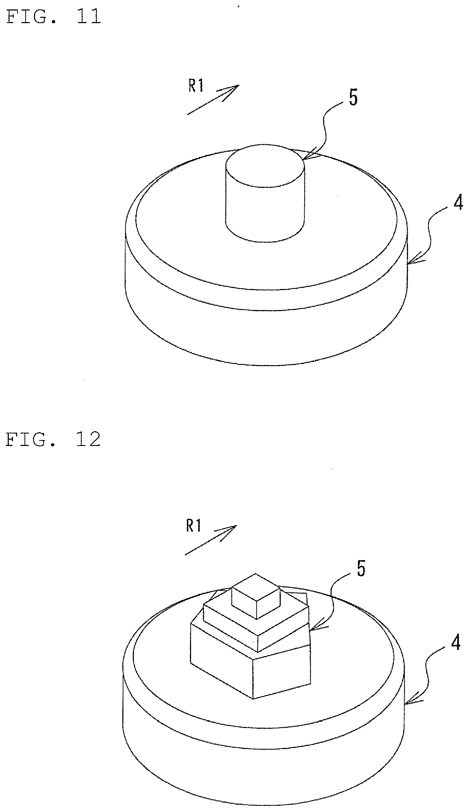

As illustrated in FIG. 11, the stud pin 1 of Comparative Example 1 has a shaft 5 constituted by a single cylinder, not by a multi-stepped structure. As illustrated in FIG. 12, the stud pin 1 of the Comparative Example 2 is the stud pin 1 of the first embodiment from which the hole 41 was eliminated. For all of Comparative Examples and the first to the fourth embodiments, the stud pins 1 were mounted on the test tire such that the tire rotational direction was oriented in the direction indicated by the arrow R1 in the drawings.

[Table 1]

| | Comparative Example 1 | Comparative Example 2 | First embodiment (FIGs. 2 and 3) |
|---|---|---|---|
| Shaft shape | Cylindrical | First step: pentagonal Second step: quadrangular Third step: quadrangular Hole: none | First step: pentagonal Second step: quadrangular Third step: quadrangular Hole: quadrangular |
| Drive performance | 100 | 103 | 107 |
| Braking performance | 100 | 105 | 109 |
| Turning performance | 100 | 103 | 105 |
| | Second embodiment (FIGs. 5A and 5B) | Third embodiment (FIGs. 6A and 6B) | Fourth embodiment (FIGs. 7A and 7B) |
| Shaft shape | First step: pentagonal Second step: quadrangular Third step: quadrangular Hole: circular | First step: pentagonal Second step: quadrangular Third step: circular Hole: quadrangular | First step: pentagonal Second step: quadrangular Third step: hexagonal Hole: quadrangular |
| Drive performance | 106 | 105 | 107 |
| Braking performance | 108 | 107 | 109 |
| Turning performance | 107 | 108 | 109 |
| | Fifth embodiment (FIGs. 8A and 8B) | | |
| Shaft shape | First step: hexagonal Second step: pentagonal Third step: triangular Hole: triangular | | |
| Drive performance | 108 | | |
| Braking performance | 107 | | |
| Turning performance | 110 | | |

The first to the fifth embodiments, in which the hole 41 was arranged on the shaft 5, exerted superior performance than Comparative Examples 1 and 2 for all of the drive performance, the braking performance and the turning performance.

DESCRIPTION OF SYMBOLS

| 1: | stud pin |
|---|---|
| 2: | base |
| 3: | shank |
| 4: | body |
| 4a: | end surface |
| 4b: | side surface |

| | |
|---|---|
| 5: | shaft |
| 11: | first step |
| 11a: | end surface |
| 11b: | side surface |
| 12: | second step |
| 12a: | end surface |
| 12b: | side surface |
| 13: | third step |
| 13a: | end surface |
| 13b: | side surface |
| 6: | pneumatic tire |
| 6a: | tread portion |
| 6b: | pin hole |
| 21a, 21b, 21c, 21d, 21e, 21f: | edge component |
| 22a, 22b, 22c, 22d, 22e: | edge component |
| 23a, 23b, 23c, 23d, 23e, 23f: | edge component |
| 41: | hole |
| 41a: | side wall |
| 41b: | bottom wall |
| 42a, 42b, 42c, 42d, 42e: | edge component |

**Claims**

1. A stud pin comprising:

   a body; and
   a shaft protruding from the body,
   wherein
   the shaft has a multi-stepped structure that comprises plural steps including at least a first step protruding from the body and a second step protruding from the first step, and
   a hole is arranged on an end surface of an endmost step of the shaft.

2. The stud pin according to claim 1, wherein an area A1 bounded by the outline of the end surface of the endmost step in a plan view and an area A2 of the hole satisfy:

$$0.1 \leq A2/A1 \leq 0.6.$$

3. The stud pin according to claim 1 or 2, wherein a depth of the hole is not less than a protruding height of the endmost step.

4. The stud pin according to any one of claims 1 to 3, wherein the outer shape of the first step in a plan view and that of the second step in a plan view are different.

5. The stud pin according to claim 4, wherein a number of edge components of the second step is less than a number of edge components of the first step.

6. The stud pin according to any one of claims 1 to 5, wherein a number of edge components of the endmost step is larger than a number of edge components of a second endmost step.

7. The stud pin according to any one of claims 1 to 6, wherein a number of edge components constituted by the margin of the hole is larger than a number of the edge components of the endmost step.

FIG. 1

FIG. 2

21a  21b  5 (1)
23a  42a
13 (13a)  22a  23b
12 (12a)
III
23d  22b
21e  42b
42d  21c
22d
11 (11a)  41
42c  23c  22c
21d
R1

FIG.3

13a  41  5
13b
12a  Ht
12b  DEh  Ha
13
12
11a
11b
4  11
4a
4b
41a  41b

FIG. 4

FIG. 5A

FIG. 5B

FIG. 6A

FIG. 6B

FIG. 7A

FIG. 7B

FIG. 8A

FIG. 8B

FIG. 9A

FIG. 9B

FIG. 10A

FIG. 10B

FIG. 11

R1

5

4

FIG. 12

R1

5

4

## INTERNATIONAL SEARCH REPORT

| International application No. |
| --- |
| PCT/JP2017/021239 |

### A. CLASSIFICATION OF SUBJECT MATTER
*B60C11/16*(2006.01)i

According to International Patent Classification (IPC) or to both national classification and IPC

### B. FIELDS SEARCHED

Minimum documentation searched (classification system followed by classification symbols)
B60C11/16

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | EP 1798068 A2 (SCASON OY), 20 June 2007 (20.06.2007), paragraphs [0001], [0016] to [0020]; each drawing & DE 602006009362 D     & EA 200602102 A & AT 443619 T          & FI 20055678 A0 | 1-4,6 |
| Y | JP 58-36708 A (Toshio TAKAYAMA), 03 March 1983 (03.03.1983), entire text; fig. 1 (Family: none) | 1-3 |

☒ Further documents are listed in the continuation of Box C.     ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 23 August 2017 (23.08.17) | 05 September 2017 (05.09.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
| --- | --- |

Form PCT/ISA/210 (second sheet) (January 2015)

**INTERNATIONAL SEARCH REPORT**

| International application No. |
|---|
| PCT/JP2017/021239 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2013-23112 A  (Bridgestone Corp.),<br>04 February 2013 (04.02.2013),<br>paragraphs [0014] to [0019]; fig. 6<br>& EP 2735454 A1<br>paragraphs [0014] to [0019]; fig. 6<br>& RU 2014106524 A        & WO 2013/014900 A1 | 1-4,6 |
| Y | JP 2014-12455 A  (Bridgestone Corp.),<br>23 January 2014 (23.01.2014),<br>paragraphs [0011], [0024]; fig. 10, 12<br>& WO 2014/006857 A1 | 1,3-4,6 |
| A | Microfilm of the specification and drawings<br>annexed to the request of Japanese Utility<br>Model Application No. 28312/1983(Laid-open<br>No. 133301/1984)<br>(The Yokohama Rubber Co., Ltd.),<br>06 September 1984 (06.09.1984),<br>pages 5 to 8; fig. 4<br>(Family: none) | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014122570 A1